# EUROPEAN PATENT APPLICATION

(11) **EP 0 612 627 A1**
(43) Date of publication of application: **31.08.1994**
(21) Application number: 94500034.7
(22) Date of filing: 18.02.1994
(51) Int. Cl.: B41M 5/00

(54) **Improved paper used in the printing industry and similar industries**

(30) Priority: 22.02.1993 ES 9300474 U
(71) Applicant: Garbayo Marco, Sergio, E-03600 Elda (ES)
(72) Inventor: Garbayo Marco, Sergio, E-03600 Elda (ES)
(74) Representative: Pons Arino, Angel

(57) **Abstract**

Improved paper used in the printing industry and similar industries, made of a vegetal flexible laminar support coated on one of its sides by a film made of a plastic material which is in turn a support for the fixation of a printing material which is transferred through heat onto the surface of an object, together with the plastic film which protects such a printing.

## Description

This present invention refers to an improved paper mainly conceived to be used in the printing industry and similar industries, and even for color photocopiers.

The new feature of the paper lies in its manufacturing proccess and the improvements as concerns its applications with regard to other known papers at present used in the commerce and/or industry.

Every and all of the improvements of the paper object of this present invention are attained through a simple manufacturing proccess, thus being highly competitive within market.

According to this invention, the paper is made of a laminar support in turn made of a vegetal flexible material.

The above laminar support has a plastic film adhered to one side which in turns acts as the fixation support for a further material -e.g., either a liquid in ink form or a powdered material being the printing proccess with the latter carried out by color photocopying.

Thus, the drawing printed on the support of the plastic film on its visible side is furthermore used for a given printing application which might for example be a transfer work onto the surface of an object.

The powdered material is a printing material used on reprography and xerography.

Since the plastic film is a support, it is furthermore the basic substance wherein the powdered material may be fully or partially integrated or the printing ink duly dispersed.

When such a paper is applied at least to a transfer, the plastic film melts and protects the sketch or drawing transferred onto the surface of the object, since it is thus protected by the plastic film which coats the surface of the object itself.

This is very important since the referred film deposited onto the surface of the drawing protects it and proveides for a longer life by preventing deterioration.

In the aim to provide for an easy understanding not only of the manufacturing proccess but instead also of the use of such a paper object of this present invention, an embodiment of the same is referred herebelow, being such an embodiment merely enunciative and not limitative in any case whatsoever, all of which is shown in the attached drawings wherein:

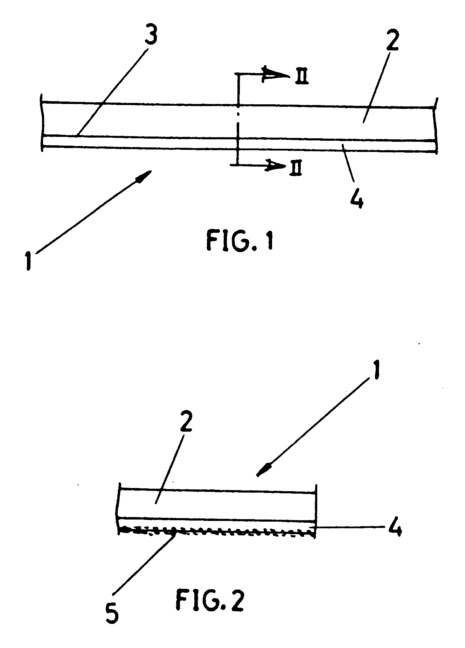

Figure 1 illustrates an extended view of a portion of the paper object of this present invention.

Figure 2 illustrates a sectional view following line II-II shown on Figure 1.

A concerns drawings, the following items are shown: paper 1 object of the present invention, having a support layer 2 made of a flexible vegetal material.

The referred layer 2 has a plastic film 4 adhered to its side 3.

The referred plastic film thus becomes the support for the positioning of a sketch defined by a product 5 which is deposited through the proper methods and may or may not be integrated into the structure of the plastic film 4.

Having both, the nature of the invention and its embodiment been duly described, it must be stated that the above specifications explained and represented on the attached drawings are capable of being modified as concerns details in so far as the fundamental aim might not be altered.

## Claims

1. Improved paper used in the printing industry and similar industries and characterized by its being made of a vegetal flexible laminar support coated on one of its sides by film made of a plastic material which is in turn a support for the fixation of a printing material which is transferred through heat onto the surface of an object, together with the plastic film which protects such a printing.
